# EUROPÄISCHE PATENTSCHRIFT

(11) **EP 0 708 511 B1**
(45) Veröffentlichungstag und Bekanntmachung des Hinweises auf die Patenterteilung: **20.05.1998**
(21) Anmeldenummer: 95115688.4
(22) Anmeldetag: 05.10.1995
(51) Int. Cl.: H02B 1/38

(54) **Schaltschrank**
Switch cabinet
Armoire de distribution

(30) Priorität: 18.10.1994 DE 4437164
(43) Veröffentlichungstag der Anmeldung: 24.04.1996
(73) Patentinhaber: AEG Sachsenwerk GmbH, D-93055 Regensburg (DE)
(72) Erfinder: Reichl, Erwin, Dipl.-Ing., D-93105 Tegernheim (DE)
(74) Vertreter: Dreiss, Fuhlendorf, Steimle & Becker

(56) Entgegenhaltungen:
- DE-A- 3 412 612
- DE-A- 3 438 603

## Beschreibung

Die Erfindung betrifft einen Schaltschrank gemäß dem Oberbegriff des ersten Anspruchs.

Ein bekannter Schaltschrank dieser Art z. B. DE 22 43 263 A1 ist mit einem Türrahmen und einer daran angelenkten, betriebsmäßig axial in der Höhe verstellbaren Tür ausgestattet. Um die Tür insbesondere im Bereich ihrer senkrechten Seitenränder in festem Eingriff mit dem Türrahmen zu halten, damit beispielsweise im Falle eines Lichtbogenüberschlags im Schaltschrank der entstehende Überdruck die Tür nicht aufreißt oder soweit vom Türrahmen abhebt, daß heiße Gase ungehindert nach außen strömen können, sind die senkrechten, U-förmig gestalteten Ränder zinnenartig ausgeschnitten, so daß Mäanderstege mit dazwischenliegenden Lücken entstehen. Bei geschlossener Tür hintergreifen die Mäanderstege der Tür die Mäanderstege am Türrahmen. Durch Axialverschiebung der Tür gelangen dann die Mäanderstege der Tür in den Bereich der Lücken der dem Türrahmen zugeordneten Mäanderstege. Während demnach die Mäanderstege der Tür bei geschlossener Tür die Mäanderstege des Türrahmens in Schwenkrichtung hintergreifen und so eine sichere Verriegelung gegen unbeabsichtigtes Öffnen bewirken, können die Mäanderstege bei axial verschobener Tür beim Aufschwenken der Tür durch die dann in Schwenkrichtung davorliegenden Lücken im Türrahmen heraugeschwenkt und die Tür damit geöffnet werden. Die freien Schenkel des U-förmigen Umbugs am Türrand stehen dabei in einer Ebene parallel zur Türrahmenebene bei geschlossener Tür. Die freien Schenkel des jeweiligen U-förmigen Türrahmenprofils liegen ebenfalls parallel zur Türrahmenebene, wobei die lichte Breite senkrecht zur Türrahmenebene zumindest weitgehend der Materialdicke des in dieses Profil eingreifenden Schenkels, also der Türblechdicke entspricht. Das hat bei der praktischen Ausführung zur Folge, daß bei den zu verarbeitenden Blechdicken von mehreren Millimetern die Erzeugung eines Umbugs mit der notwendigen geringen lichten Breite und Maßhelligkeit mit vertretbarem Aufwand nicht erzeugt werden kann. Daher wird an den Türrahmen in der Praxis je eine Winkelleiste angesetzt, welche in einem Schenkel die Mäanderstege aufweist. Die Herstellung und Festsetzung der Winkelleisten erfordert zusätzliche Herstellwerkzeuge und Montagearbeiten. Weiterhin treffen beim Absenken einer nicht völlig aufliegendemm Tür die parallel verlaufenden Blechkanten der Mäanderstege aufeinander und verhindern so das Schließen der Tür (Verhaken).

Der Erfindung liegt die Aufgabe zugrunde, bei einem Schaltschrank gemäß dem Oberbegriff des ersten Anspruchs Maßnahmen zu treffen, durch welche eine ohne besonderen Aufwand realisierbare Ausgestaltung der Verriegelungselemente ermöglicht wird und eine erhöhte Funktionssicherheit des Schließvorgangs herbeigeführt wird.

Die Lösung dieser Aufgabe erfolgt gemäß der Erfindung durch die kennzeichnenden Merkmale des ersten Anspruchs.

Bei einer Ausgestaltung eines Schaltschranks gemäß der Erfindung wird die senkrecht zur Türrahmenebene gemessene Höhe B der betreffenden Mäanderstege durch bevorzugt rechtwinkliges Abbiegen der Mäanderschenkel am Türrand auf ein beliebiges Maß, insbesondere ein Vielfaches der Blechdicke erhöht. Dadurch kann die lichte Breite des mit den türrahmenseitigen Mäanderstegen versehenen Profils entsprechend groß gewählt werden, ohne in der Verriegelungsstellung der Tür ein unzulässiges Spiel in Schwenkrichtung zu bewirken. Bei entsprechend großer Breite des türrahmenseitigen U-förmigen Profils kann dasselbe mit üblichen Biegewerkzeugen und damit ohne besonderen Aufwand mit der für den Anwendungszweck erforderlichen Genauigkeit einstückig aus dem Türrahmenblech gebogen werden. Dabei können trotz der Blechdicke von mehreren Millimetern übliche Blechverarbeitungswerkzeuge zur Anwendung gelangen, um die notwendigen U-förmigen Umbüge am Türrahmenrand ausbilden zu können. Von Vorteil ist dabei auch, daß die Eckbereiche der Mäanderstege am Türrand beim Zuschnitt gleich mit Anlaufschrägen versehen werden können, die an den Eckbereichen vorgesehen werden, welche bei der axialen Verstellung in die Verriegelungsstellung zuerst mit den Mäanderstegkanten am Türrahmen in Eingriff treten. Bei Anordnung der Mäanderstege an den senkrechten Türrändern und Absenkung der Tür in die Verriegelungsstellung befinden sich demnach die Anlaufschrägen an den unteren Eckbereichen der Mäanderstege. Ein gegenseitiges Verhaken der Mäanderstege beim Überführen der Tür in die Verriegelungsstellung wird dadurch sicher vermieden. Vorzugsweise weisen die Mäanderstege an der Tür in Richtung der Türverstellrichtung eine größere Höhe auf als die Mäanderstege am Türrahmen, wenn die Türblechdicke kleiner als die für den Türrahmen verwendete Blechdicke ist. Dadurch kann das gegen Aufbiegen wirkasame Biegemoment der Mäanderstege so gewählt werden, daß für ein Aufbiegen etwa gleich große Kräfte notwendig sind. Um außerdem bei der Vielzahl von miteinander in Eingriff tretenden Mäanderstegen eine den Forderungen entsprechende enge Auflage des Türrandes auf dem Türrahmenblech mit einfachen Mitteln zu gewährleisten ist das freie Spiel zwischen wenigstens einem Paar von bei geschlossener Tür in Türschwenkrichtung hintereinander greifenden Mäanderstegen kleiner als zwischen anderen Paaren. Dabei können dieser Mäanderstege mit dem verminderten Spiel vorzugsweise im Bereich von Türecken vorgesehen sein. Dabei kann der Mäandersteg an der Tür höher als die benachbarten anderen Mäanderstege ausgebildet sein. Ist seine Höhe zu groß, und somit kein ausreichendes Spiel zwischen den Mäanderpaaren vorhanden, so kann das erforderliche Spiel entweder durch Kürzen des Mäandersteges an der Tür oder - noch besser - durch Aufbiegen des korrespondierenden Mäandersteges am Rahmen hergestellt werden. Es kann jedoch auch bei dem Mäanderpaar mit vermindertem Spiel die Breite des Umbugs im Bereich des zugehörigen Mäandersteges am Türrahmen geringer als im Bereich anderer Mäanderstege gewählt werden. Zur Justierung sind dann ebenfalls die vorgenannten Maßnahmen anwendbar. Zur Erleichterung der Arbeit ist es dabei zweckmäßig, wenigstens einen, und zwar am besten den vom Normalmaß abweichenden Mäanderschenkel der zusammenwirkenden Mäanderpaare, die ein vermindertes Spiel aufweisen, mit einem Kennzeichen zu versehen.

Die Erfindung ist nachfolgend anhand von Skizzen eines Ausführungsbeispiels näher erläutert.

Es zeigen:
- Fig. 1: einen teilweise dargestellten Schaltschrank mit einseitig schwenkbar angelenkter Tür im Schnitt quer zur Türachse,
- Fig. 2: eine Schnittzeichnung durch die Anordnung nach Fig. 1 im Bereich der Türachse,

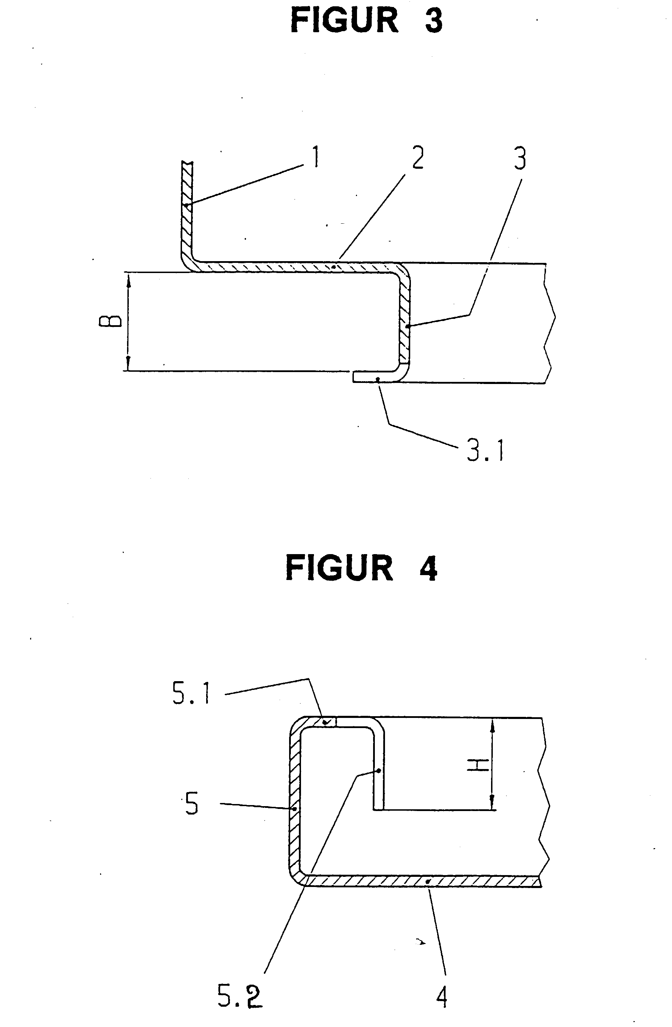

- Fig. 3: einen Schenkel des Türrahmens im Querschnitt,
- Fig. 4: einen Türrand im Querschnitt,
- Fig. 5: eine Abwicklung der jeweils zusammenwirkenden Ränder der Tür und des Türrahmens mit jeweils in Richtung der Türachse hintereinander angeordneten und aufeinander abgestimmten Mäanderstegen in einer das Öffnen und Schließen der Tür zulassenden axialen Stellung und
- Fig. 6: die Anordnung nach Fig. 5 bei axial verstellter, in Verriegelungsstellung befindlicher Tür.

Ein als äußeres Gehäuse eines Schaltschranks ausgebildetes Gerüst 1 weist an einer senkrechten Seitenwand 2, insbesondere an seiner Front einen Türrahmen auf, der zwei parallel zueinander verlaufende und vorzugsweise senkrecht stehende Türrahmenstege 3 besitzt. Die Türrahmenstege 3 stehen senkrecht zur Ebene der Seitenwand 2 nach außen, wobei ihr freies Ende als von der gebildeten Türöffnung weg parallel zur Seitenwand 2 abgewinkelter Schenkel 3.1 ausgebildet ist. Die Türrahmenstege 3 mit ihren Schenkeln 3.1 bilden zusammen mit dem jeweils benachbarten Abschnitt der Seitenwand 2 einen U-förmigen, nach außen offenen Umbug, der einstückig mit der Seitenwand 2 verbunden ist und senkrecht zur Seitenwand eine lichte Breite B aufweist, welche mindestens dreimal so groß ist wie die Materialstärke einer zugeordneten Tür 4. Die lichte Breite des Türrahmen-Umbugs liegt in der praktischen Ausbildung beispielsweise zwischen 10 mm und 40 mm, vorzugsweise bei ca. 20 mm, wenn von einer Blechdicke der Seitenwand 2 zwischen 1,5 mm und 5 mm, vorzugsweise von ca. 3 mm ausgegangen wird. Unter diesen Voraussetzungen läßt sich der Umbug 2, 3, 3.1 aufgrund der geschaffenen großen lichten Breite mit üblichen Blechbiegewerkzeugen einstückig herstellen.

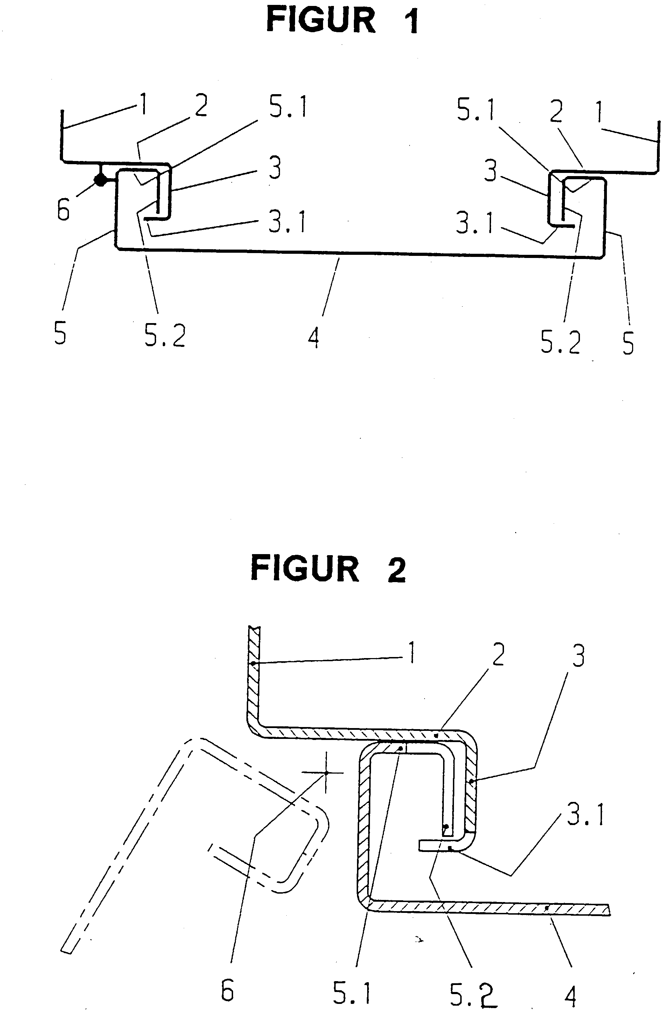

Damit die Tür 4, welche den Türrahmen rundum überdeckt, insbesondere im Falle eines innerhalb des Gerüsts 1 auftretenden Störlichtbogens die vom Türrahmen 3 umschlossene Öffnung sicher verschlossen hält, ist die Tür 4 an ihren parallel zu den Türrahmenstegen 3 verlaufenden Türrändern 5 ebenfalls mit einem U-förmigen Umbug ausgestattet, der mit seinem freien Schenkel 5.1 radial von außen parallel und eng benachbart zur Seitenwand 2 in den Umbug am Türrahmensteg 3 eingreift. Dabei ist einer der Türränder 5 über ein Türscharnier 6 mit einem Abschnitt der Seitenwand 2 gelenkig verbunden, wobei die Achse des Türscharniers 6 parallel zum benachbarten Türrahmensteg 3 bzw. Türrand 5 vorzugsweise in senkrechter Richtung verläuft. Die Anordnung ist dabei so getroffen, daß die Schenkel 5.1 der Türränder 5 bei geschlossener Tür 4 eng an die Außenseite der Seitenwand 2 herangeführt sind, wie es insbesondere Fig. 2 zeigt. Nachdem jedoch die Materialstärke der Tür 4 bzw. des zugehörigen Schenkels 5.1 wesentlich geringer ist als die lichte Breite B des türrahmenseitigen Umbugs 2, 3, 3.1, ist zur Vermeidung eines entsprechenden Spiels zwischen den Schenkeln 3.1 und 5.1 das freie Ende 5.2 der türseitigen Schenkel 5.1 parallel zum jeweiligen Türrahmensteg 3 zum Schenkel 3.1 bzw. zur Hauptebene der Tür 4 hin so weit abgewinkelt, wie es durch die lichte Breite B des Umbugs 2, 3, 3.1 vorgegeben ist. In der in den Fig. 1, 2 und 6 dargestellten Schließstellung der Tür zeigt es sich, daß der abgewinkelte Endabschnitt 5.2 eine der lichten Breite des türrahmenseitigen Umbugs 4, 5, 5.2 angepaßte Höhe H aufweist. Bei einem im Gerüst 1 auftretenden Überdruck wird dadurch die Tür 4 aufgrund des weitgehend spielfreien Gegenüberstehens der Endkanten der Endabschnitte 5.2 und der Schenkel 3.1 die Tür im Bereich der Schenkel 5.1 in dichter Zuordnung zur Seitenwand 2 gehalten.

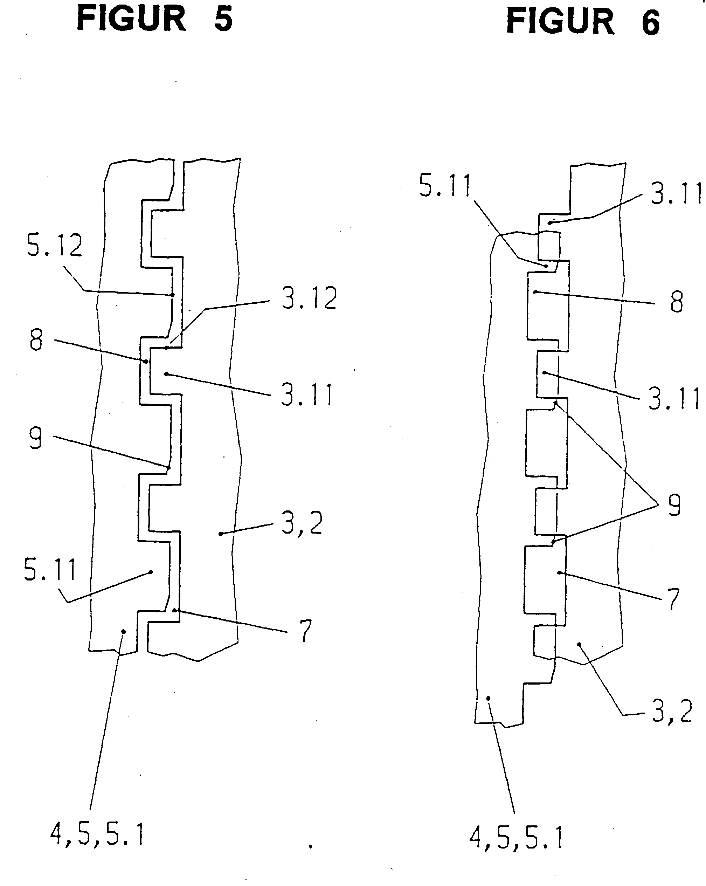

Damit die Tür 4 geöffnet und geschlossen werden kann, sind die türrahmenseitigen Schenkel 3.1 wie die Schenkel 5.1 mit ihren Endabschnitten 5.2 durch Ausschnitte 7 bzw. 8 zinnenartig ausgeformt, so daß Mäanderstege 3.11 bzw. 5.11 gebildet sind. Die Anordnung der Mäanderstege 3.11 und 5.11 ist so getroffen, daß durch eine axiale Verstellung der Tür 4 die türrahmenseitigen Mäanderstege 3.11 in den Bereich der Aussparungen 8 zwischen den türseitigen Mäanderstegen 5.11 gelangen. Dadurch kann die Tür 4 ungehindert geöffnet und geschlossen werden, wie es Fig. 5 zeigt. Wird dagegen die Tür 4 axial verschoben, wie es Fig. 6 zeigt, dann kommen die Mäanderstege 3.11 und 5.11 in Schwenkrichtung in Überdeckung, so daß bei geschlossener TÜr 4 die notwendige, weitgehend spielfreie Anlage der türseitigen Schenkel 5.1 an der Frontwand 2 des Gerüsts 1 aufgrund des hakenartigen Ineinandergreifens sichergestellt ist.

Damit beim Verschieben der Tür in die Verriegelungsstellung kein Verhaken zwischen den dabei aufeinander zuwandernden Kanten der Mäanderstege 3.11 und 5.11 eintritt, sind die in dieser Verschieberichtung vorn liegenden Ecken der türseitigen Mäanderstege 5.11 schräg abgeschnitten, so daß Anlaufschrägen 9 gebildet sind. Bei senkrechtem Verlauf der Achse des Türscharniers 6 und üblicher Absenkung der Tür 4 in ihre Verriegelungsstellung kommen dadurch die im unteren Eckbereich vorgesehenen Anlaufschrägen 9 in Gleitanlage mit den nach oben weisenden Kanten 3.12 der türrahmenseitgen Mäanderstege 3.11, so daß beim weitern Absenken die freien Endkanten 5.12 der türseitigen Mäanderstege 5.11 auf die der Seitenwand 2 zugewandte Seitenfläche der Mäanderschenkel 3.11 aufgleiten. Die mit der Tür 4 verbundenen Mäanderstege 5.11 weisen ggf. in Richtung der Türverstellrichtung eine größere Höhe auf, als die MÄanderstege 3.11 am Türrahmen 3. Diese Ausgestaltung ist dann zweckmäßig, wenn die Materialstärke, also die Blechdicke des Türrahmens 3 größer als die der Tür 4 ist. Die Ausschnitte 7 sind dann den Mäanderstegen 5.11 und die Ausschnitt 8 den Mäanderstegen 3.11 entsprechend ausgebildet. Die Mäanderstege 3.11 und 5.11 können dadurch so ausgebildet werden, daß ihre mechanische Festigkeit gegen Aufbiegen einander weitgehend entspricht. Um im übrigen nicht alle Mäanderstegpaare 3.11, 5.11 auf das in Vorschriften niedergelegte Spiel justieren zu müssen, kann das freie Spiel in Schwenkrichtung zwischen wenigstens einem Paar von bei geschlossener Tür 4 in Türschwenkrichtung hintereinandergreifenden Mäanderstegen 3.11, 5.11 kleiner als zwischen anderen Paaren von Mäanderstegen sein. Diese Mäanderstegpaare mit vermindertem Spiel werden insbesondere in den Eckbereichen der Tür vorgesehen. Dabei können die Mäanderstege 5.11 an der Tür 4 bei diesen Paaren etwas höher als die übrigen Mäanderstege 5.11 bei der Fertigung ausgebildet werden. Sind diese Mäanderstege 5.11 zu hoch, können sie abgefeilt oder abgeschliffen werden. Es kann jedoch auch der zugehörige Mäandersteg 3.11 auf das erforderliche Maß gebogen werden. Diese Maßnahme ist auch dann anwendbar, wenn alle türseitigen Mäanderstege 5.11 gleich hoch ausgebildet sind. Vorzugsweise wird wenigstens einer der betreffenden Mäanderstege 3.11 oder 5.11 mit einem Kennzeichen in Form einer Einprägung oder einer sonstigen Stanzmarkierung versehen.

## Patentansprüche

1. Schaltschrank, insbesondere für Mittelspannungsschaltanlagen, mit einem Türrahmen (3) und einer daran angelenkten, axial verstellbaren Tür (4) sowie mit am Türrahmen (3) und an der Tür (4) vorgesehenen, als Verriegelungselemente wirkenden Mäanderstegen (3.11,5.11) am jeweils freien Schenkel (3.2,5.2) eines U-förmigen, an gegenüberstehenden Türrändern (5) und Türrahmenstegen (3) vorgesehenen Umbugs (2,3,3.1;5,5.1,5.2), die hakenartig ineinandergreifen, dadurch gekennzeichnet, daß der Umbug (2,3,3.1) am Türrahmensteg (3) senkrecht zur Seitenwand (2) eine lichte Breite (B) aufweist, die mindestens der dreifachen Türblechdicke entspricht oder wenigstens 10 mm beträgt und daß die Mäanderstege (5.11) des türseitigen Umbugs (5,5.1,5.2) einen zur Türhauptfläche hin abgewinkelten Endabschnitt (5.2) aufweisen und der abgewinkelte Endabschnitt (5.2) eine der lichten Breite (B) des türrahmenseitigen Umbugs (2,3,3.1) entsprechend angepaßte Höhe (H) aufweist.

2. Schaltschrank nach Anspruch 1, dadurch gekennzeichnet, daß bei senkrechter Anordnung der Mäanderstege (5.11) die unteren Eckbereiche derselben am Türrand (5) nach Art von Anlaufschrägen (9) geneigt sind.

3. Schaltschrank nach Anspruch 1 oder 2, dadurch gekennzeichnet, daß die Mäanderstege (5.11) an der Tür (4) in Richtung der Türverstellrichtung eine größere Höhe bei geringerer Türblechdicke aufweisen als die Mäanderstege (3.11) am Türrahmen (3) bei größerer Rahmenblechdicke.

4. Schaltschrank nach Anspruch 1 oder einem der folgenden, dadurch gekennzeichnet, daß das freie Spiel zwischen wenigstens einem Paar von bei geschlossener Tür in Türschwenkrichtung hintereinandergreifenden Mäanderstegen (3.11, 5.11) kleiner als zwischen anderen Paaren von Mäanderstegen ist.

5. Schaltschrank nach Anspruch 4, dadurch gekennzeichnet, daß wenigstens im Bereich von Türecken je ein Mäanderstegpaar mit vermindertem Spiel vorgesehen ist.

6. Schaltschank nach Anspruch 4 oder 5, dadurch gekennzeichnet, daß bei dem Mäanderstegpaar mit vermindertem Spiel der Mäandersteg (5.11) an der Tür (4) höher als andere Mäanderstege ausgebildet ist.

7. Schaltschrank nach Anspruch 4 oder 5, dadurch gekennzeichnet, daß bei dem Mäanderpaar mit vermindertem Spiel die Breite des Umbugs im Bereich des zugehörigen Mäandersteges am Türrahmen (3) geringer als im Bereich anderer Mäanderstege ist.

8. Schaltschrank nach Anspruch 4 oder einem der folgenden, dadurch gekennzeichnet, daß bei dem Mäanderpaar mit vermindertem Spiel wenigstens ein Mäanderschenkel ein Kennzeichen trägt.

9. Schaltschrank nach Anspruch 1 oder einem der folgenden, dadurch gekennzeichnet, daß der türrahmenseitige Umbug (3, 3.1) einstückig mit der zugehörigen Seitenwand (2) verbunden ist.

10. Schaltschrank nach Anspruch 1 oder einem der folgenden, dadurch gekennzeichnet, daß der türrandseitige Umbug (5, 5.1, 5.2) einstückig mit der Tür (4) verbunden ist.

## Claims

1. A switch cabinet, in particular for medium-voltage switching installations, comprising a door frame (3) and a door (4) which is pivoted thereto and which is axially displaceable, and meander-shaped bar portions (3.11, 5.11) which are provided on the door frame (3) and the door (4) and which act as locking elements and which are disposed on the respective free limb (3.2, 5.2) of a U-shaped bend portion (2, 3, 3.1; 5, 5.1, 5.2) provided at mutually oppositely disposed door edges (5) and door frame bar portions (3), the meander-shaped bar portions engaging hook-like one into the other, characterised in that in perpendicular relationship to the side wall (2) the bend portion (2, 3, 3.1) on the door frame bar portion (3) is of an internal width (B) which at least corresponds to three times the thickness of the door sheet material or is at least 10 mm and that the meander-shaped bar portions (5.11) of the bend portion (5, 5.1, 5.2) on the door side have an end portion (5.2) which is angled towards the main surface of the door and the angled end portion (5.2) is of a height (H) which is suitably matched to the internal width (B) of the bend portion (2, 3, 3.1) on the door frame side.

2. A switch cabinet according to claim 1 characterised in that when the meander-shaped bar portions (5.11) are arranged perpendicularly the lower corner regions thereof are inclined at the door edge (5) in the manner of inclined run-on surfaces (9).

3. A switch cabinet according to claim 1 or claim 2 characterised in that the meander-shaped bar portions (5.11) on the door (4) are of a greater height in the direction of displacement of the door, with a smaller thickness for the door sheet material, than the meander-shaped bar portions (3.11) on the door frame (3) with a greater thickness of the frame sheet material.

4. A switch cabinet according to claim 1 or one of the following claims characterised in that the free play between at least one pair of meander-shaped bar portions (3.11, 5.11) which engage one behind the other in the direction of pivotal movement of the door when the door is closed is less than between other pairs of meander-shaped bar portions.

5. A switch cabinet according to claim 4 characterised in that a respective pair of meander-shaped bar portions with reduced play is provided at least in the region of respective corners of the door.

6. A switch cabinet according to claim 4 or claim 5 characterised in that in the case of the pair of meander-shaped bar portions with reduced play the meander-shaped bar portion (5.11) on the door (4) is higher than other meander-shaped bar portions.

7. A switch cabinet according to claim 4 or claim 5 characterised in that in the case of the pair of meander-shaped bar portions with reduced play the width of the bend portion is smaller in the region of the associated meander-shaped bar portion on the door frame (3) than in the region of other meander-shaped bar portions.

8. A switch cabinet according to claim 4 or one of the following claims characterised in that in the case of the pair of meander-shaped bar portions with reduced play at least one meander-shaped limb carries an identification.

9. A switch cabinet according to claim 1 or one of the following claims characterised in that the bend portion (3, 3.1) on the door frame side is integrally connected to the associated side wall (2).

10. A switch cabinet according to claim 1 or one of the following claims characterised in that the bend portion (5, 5.1, 5.2) on the door edge side is integrally connected to the door (4).

## Revendications

1. Armoire de distribution, en particulier pour installations de distribution à tension moyenne, comportant une huisserie (3) reliée à une porte (4) ajustable axialement, et des pattes en créneau formant éléments de verrouillage (3.11, 5.11), prévues sur l'huisserie (3) et la porte (4), en chaque branche libre (3.2, 5.2) d'une partie recourbée en forme de U (2, 3, 3.1, 5, 5.1, 5.2) prévue en regard des bords de la porte (5) et des pattes d'huisserie (3), les pattes en créneau coopèrant à la façon de crochets, caractérisée en ce que la partie recourbée (2, 3, 3.1) sur la patte d'huisserie (3) présente, perpendiculairement à la paroi latérale (2), une largeur libre (B) d'au moins trois fois l'épaisseur de la tôle de la porte, ou d'au moins 10mm, et en ce que les pattes en créneau (5.11) de la partie recourbée (5, 5.1, 5.2) de la porte ont un segment terminal (5.2) incliné par rapport au plan principal de la porte, et le segment terminal (5.2) incliné a une hauteur (H) correspondant à la largeur libre (B) de la partie recourbée (2, 3, 3.1) de l'huisserie.

2. Armoire de distribution selon la revendication 1, caractérisée en ce que, par la disposition perpendiculaire des pattes en créneau (5.11), les coins inférieurs de celles-ci sont inclinés par rapport au bord de la porte (5) de façon biseautée (9).

3. Armoire de distribution selon la revendication 1 ou 2, caractérisée en ce que les pattes en créneau (5.11) de la porte (4) présentent, dans la direction d'ajustement de la porte, une plus grande hauteur avec une plus petite épaisseur de tôle de porte, que les pattes en créneau (3.11) de l'huisserie (3) ayant une plus grande épaisseur de tôle de l'huisserie.

4. Armoire de distribution selon la revendication 1 ou l'une des suivantes, caractérisée en ce que le jeu libre entre au moins une paire de pattes en créneau (3.11, 5.11), s'engrènant l'une derrière l'autre dans la direction de pivotement de la porte, quand la porte est fermée, est plus petit que le jeu entre les autres paires des pattes en créneau.

5. Armoire de distribution selon la revendication 4, caractérisée en ce que, au moins à proximité de chacun des coins de la porte, une paire des pattes en créneau avec jeu réduit est prévue.

6. Armoire de distribution selon la revendication 4 ou 5, caractérisée en ce que pour la paire de pattes en créneau avec jeu réduit, la patte en créneau (5.11) sur la porte (4) est plus haute que les autres pattes en créneau.

7. Armoire de distribution selon la revendication 4 ou 5, caractérisée en ce que, sur la paire de pattes en créneau avec jeu réduit, la largeur de la partie recourbée de l'huisserie (3) au voisinage de la patte en créneau correspondante est plus petite qu' au voisinage des autres pattes en créneau.

8. Armoire de distribution selon la revendication 4 ou l'une des suivantes, caractérisée en ce que, sur la paire des pattes en créneau avec jeu réduit, au moins une patte en créneau porte une marque.

9. Armoire de distribution, selon la revendication 1 ou l'une des suivantes, caractérisée en ce que la partie recourbée (3, 3.1) de l'huisserie est reliée d'une seule pièce à la paroi latérale (2) correspondante.

10. Armoire de distribution selon la revendication 1 ou l'une des suivantes, caractérisée en ce que la partie recourbée (5, 5.1, 5.2) du bord de la porte (4) est reliée à la porte d'une seule pièce.
